# FASCICULE DE BREVET EUROPEEN

(11) **EP 1 464 461 B1**
(45) Date de publication et mention de la délivrance du brevet: **18.01.2006**
(21) Numéro de dépôt: 04005813.3
(22) Date de dépôt: 11.03.2004
(51) Int. Cl.: B28D 7/04, B28D 5/04, B23D 57/00

(54) **Procédé et dispositif de sciage par fil**
Verfahren und Vorrichtung zum Drahtsägen
Process and device for wire sawing

(30) Priorité: 01.04.2003 CH 5832003
(43) Date de publication de la demande: 06.10.2004
(73) Titulaire: HCT Shaping Systems SA, 1033 Cheseaux (CH)
(72) Inventeur: Müller, Andreas, 6353 Weggis (CH); Bortnikov, Alexander, 124365 Moskau (RU)
(74) Mandataire: Micheli & Cie

(56) Documents cités:
- WO-A-02/26431
- WO-A-91/12915
- DE-A- 19 638 990
- US-A- 4 646 710

## Description

La présente invention concerne un procédé de sciage par fil comprenant le sciage d'au moins une pièce à scier prismatique à base sensiblement carrée ou rectangulaire au moyen d'au moins une nappe de fils tendue entre au moins deux cylindres guide-fils dont les axes sont parallèles à un plan de travail et maintenue en position par des gorges prévues sur la surface des cylindres guide-fils qui définissent l'intervalle entre les fils de la nappe de fils, donc l'épaisseur des tranches sciées, les fils de la nappe étant susceptibles de se déplacer selon un mouvement alternatif ou continu en appui contre la ou les pièces à scier fixées sur au moins une table support par l'intermédiaire d'une plaque intermédiaire, le procédé de sciage étant effectué par un mouvement d'avance relatif entre la pièce à scier et la nappe de fils.

L'invention concerne également un dispositif pour la mise en oeuvre du procédé précité.

Des dispositifs de sciage par fil du type précité avec déplacement des fils de la nappe de fil ou de la pièce à scier sont déjà connus, spécialement dans l'industrie des composants électroniques des ferrites, des quartz et silices, pour l'obtention en tranches fines de matériaux tels que le silicium poly- ou monocristattin ou de nouveaux matériaux tels que GaAs, InP, GGG ou également le quartz, le saphir synthétique, des matériaux céramiques.

Dans les dispositifs connus, la zone de sciage est constituée d'un ensemble d'au moins deux cylindrés placés parallèlement. Ces cylindres, appelés guide-fils, sont gravés avec des gorges définissant l'intervalle entre les fils de la nappe, soit l'épaisseur des tranches. La pièce à scier est fixée sur une table support qui se déplace perpendiculairement à la nappe de fils. La vitesse de déplacement définit la vitesse de coupe. Le renouvellement du fil, ainsi que le contrôle de sa tension se fait dans une partie appelée zone de gestion du fil située en dehors de la zone de sciage proprement dite. L'agent qui régira la découpe est soit un abrasif fixé sur le fil, soit un abrasif libre amené sous forme de barbotine. Le fil n'agit que comme transporteur. Lors de la découpe en tranches fines de la pièce à scier, le fil tendu est à la fois guidé et tracté par les cylindres guide-fils. Les pièces à scier présentent dans la majeure partie des cas une forme prismatique à base rectangulaire, carrée ou pseudo-carrée.

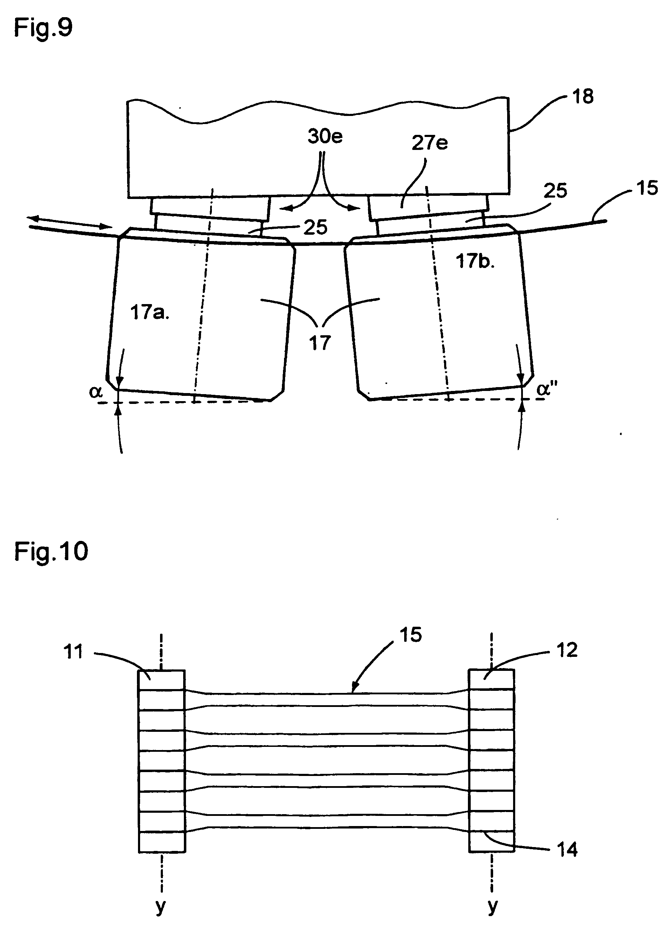

Dans les procédés et dispositifs de sciage connus, la pièce ou les pièces à scier sont montées sur la machine de façon qu'une de leur face prismatique soit parallèle au plan de travail. Lors de l'entame du sciage, on a alors constaté que les fils de la nappe de fils glissent sur la surface et ont tendance à se grouper deux par deux, ce qui engendre des tranches sciées ou wafers d'épaisseur inégale (figure 10), ce qui est très gênant pour de nombreuses applications menant à des rejets abondants.

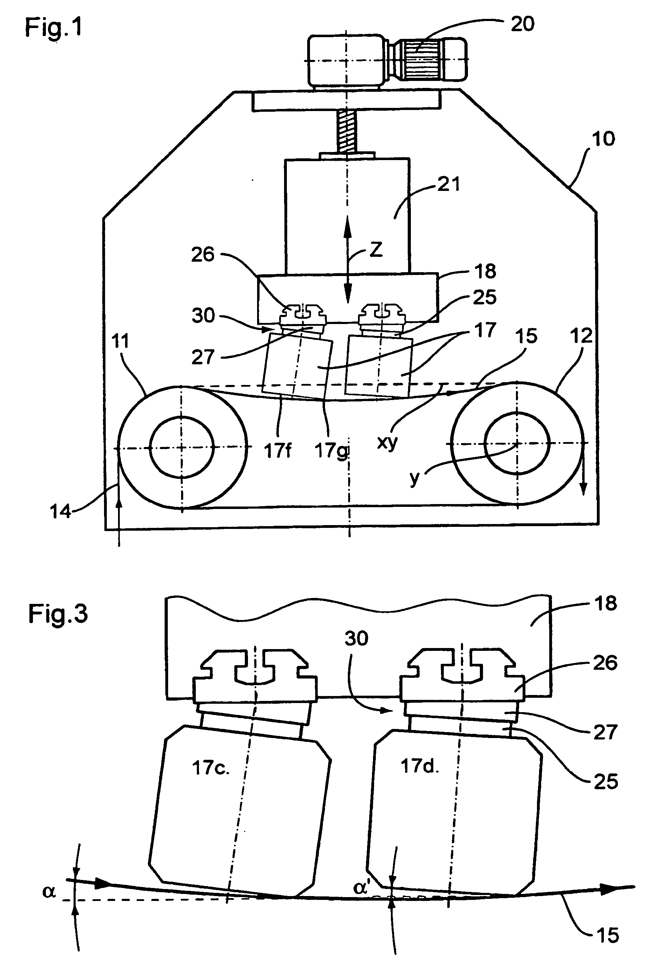

Lors du sciage, la nappe de fils forme une dépression et incurvation due à la force d'application des pièces à scier visible à la figure 1. A la fin du sciage les fils rentrent dans la plaque intermédiaire, typiquement en verre, mais aussi en epoxy, graphite ou d'autres matériaux durs, sur laquelle la pièce à scier est collée. Etant donné leur incurvation et inclinaison, les fils pénètrent lors de leur avance longitudinale de cette plaque intermédiaire et de la colle avec un faible angle dans la matière de la pièce à scier.

La bordure supérieure des tranches sciées présente alors un écaillage préjudiciable qu'il y a lieu d'éviter dans le cas de nombreuses applications.

Le document DE 196 38 990 décrit une machine de sciage par fil du type précité. Cette machine comprend un dispositif de maintien de la pièce à scier qui est agencé de façon à permettre un pivotement de la pièce à scier pendant son sciage. Le dispositif de maintien comprend à cet effet un guidage circulaire avec un mécanisme d'entraînement pour effectuer un pivotement circulaire aller-retour de la pièce à scier pendant le sciage. Ainsi des pièces de grand diamètre peuvent être sciées.

Le document WO 02/26431 révèle également un dispositif de sciage par fil d'un même genre dans lequel un dispositif d'oscillation permet de produire un mouvement d'oscillation relatif entre la pièce à scier et la nappe de fils autour d'un axe d'oscillation dont la position spatiale peut être réglée et programmée de façon que cet axe d'oscillation se trouve à une distance programmable et réglable d'un axe de rotation effectif du dispositif d'oscillation. Dans un mode d'exécution, le dispositif d'oscillation comprend à cet effet des organes de rotation et des organes de translation.

Ces deux documents concernent donc des dispositifs pour faire osciller la pièce à scier lors de l'avancement du sciage. Ces documents ne décrivent cependant aucune solution pour remédier aux inconvénients précités, à savoir le glissement des fils en début de sciage et l'écaillage préjudiciable en fin de sciage.

La présente invention a précisément pour but de remédier à ces inconvénients, et le procédé selon la présente invention est caractérisé par le fait que l'on fixe la ou les pièces à scier sur la table support de façon telle qu'une des faces prismatiques de cette pièce dirigée vers la nappe de fils forme un angle d'inclinaison prédéterminé avec ledit plan de travail suivant une droite d'intersection parallèle aux axes des cylindres guide-fils, la grandeur de cet angle d'inclinaison étant fixée de manière que, d'une part, l'entame du sciage s'effectue par une arête prismatique de la ou des pièces à scier et, d'autre part, de manière qu'en fin de coupe les fils de la nappe de fils ne pénètrent pas, lors de leur avance longitudinale, à partir d'une plaque intermédiaire donnée dans la pièce à scier qui est fixée sur cette plaque intermédiaire donnée.

Grâce à ces caractéristiques, il est possible d'obtenir une entame de sciage régulière avec des tranches d'égale épaisseur et une finition du sciage précis sans écaillage. Deux types de défauts majeurs de nature différente peuvent ainsi être évités simultanément grâce à la présente invention.

Le procédé peut avantageusement être caractérisé par le fait que l'on fixe au moins deux pièces à scier prismatiques sur la table support, que l'on déplace le fil selon un mouvement continu et que l'on fixe lesdits angles d'inclinaison de façon qu'ils s'ouvrent dans une direction opposée à la direction de déplacement du fil et de manière que le sciage des pièces commence par l'arête prismatique se trouvant en aval par rapport à la direction de déplacement des fils de la nappe de fils.

Le début du sciage et la fin de sciage des tranches peuvent ainsi être effectués de façon particulièrement exacte.

L'invention concerne également un dispositif de sciage pour la mise en oeuvre du procédé précité tel que défini aux revendications 6 et 8.

D'autres avantages ressortent des caractéristiques exprimées dans les revendications dépendantes et de la description exposant ci-après l'invention plus en détail à l'aide de dessins qui représentent schématiquement et à titre d'exemple deux modes d'exécutions et des variantes.
La figure 1 est une vue de face d'un premier mode d'exécution de l'invention.
Les figures 2a et 2b sont des vues de face partielles de ce mode d'exécution dans deux positions de sciage différentes.
La figure 3 est une vue de détail de ce mode d'exécution appliqué au sciage de pièces d'un autre type.
Les figures 4 à 8 illustrent différentes variantes de l'organe d'inclinaison.
La figure 9 est une vue de détail d'un second mode d'exécution.
La figure 10 est une vue schématique de dessus de la nappe de fils d'un dispositif conventionnel antérieur à la présente invention.

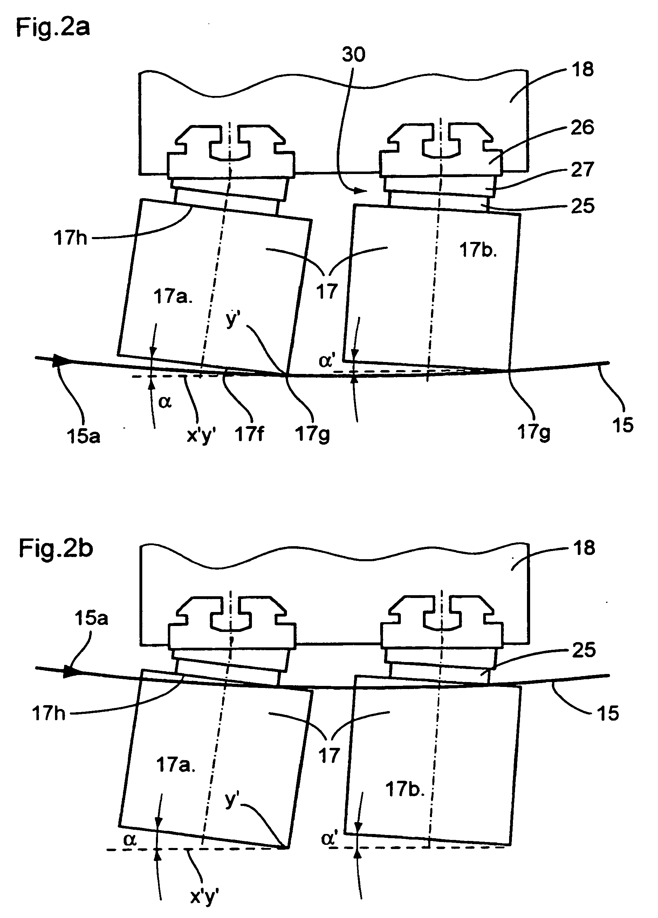

En référence aux figures 1, 2a et 2b, le dispositif de sciage selon le premier mode d'exécution comprend un bâti 10 et des cylindres guide-fils 11, 12, ici au nombre de deux, montés sur ce bâti avec leurs axes disposés parallèlement, étant bien entendu que le dispositif pourrait avoir plus que deux cylindres guide-fils, par exemple quatre.

Le fil 14 est déroulé d'une bobine débitrice, non illustrée, et ensuite enroulé autour des cylindres guide-fils pour former au moins une nappe de fils 15 parallèles dans une zone de sciage. Le fil est ensuite récupéré dans un dispositif adéquat non illustré, tel qu'une bobine réceptrice ou un bac de récupération.

Une, deux ou davantage de pièces à scier 17, telles que des lingots en un matériau dur, sont montées sur une table support 18.

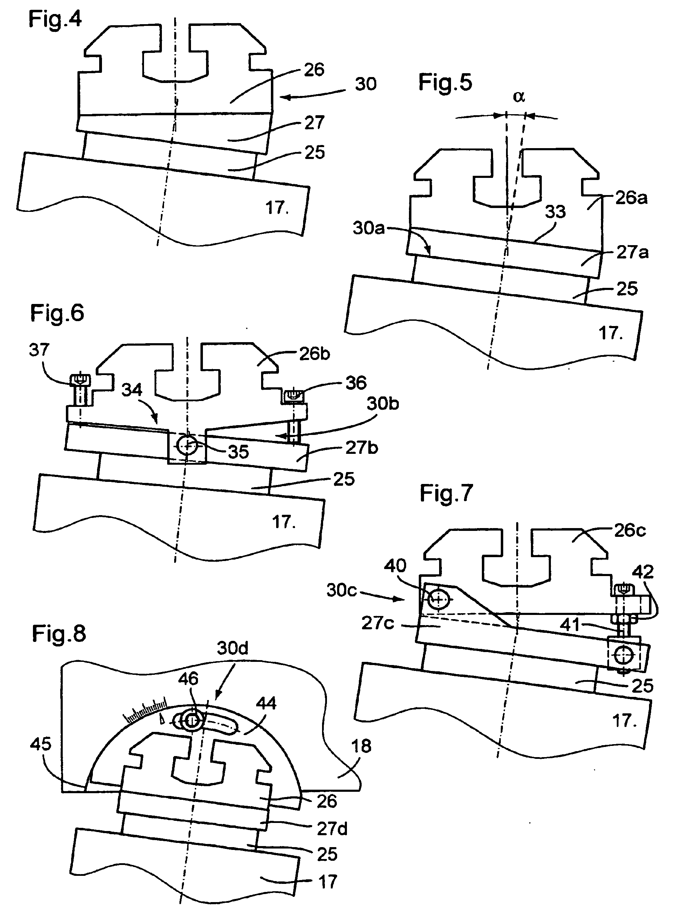

Ces pièces à scier présentent une forme prismatique allongée avec une base carrée, pseudo-carrée ou rectangulaire et quatre faces prismatiques principales dont une 17f, en position inférieure, est dirigée vers la nappe de fils 15. Les arêtes sont franches dans le cas des pièces 17 multicristallines représentées aux figures 2a et 2b ou arrondies (pseudo-carrées) dans le cas des pièces monocristallines représentées à la figure 3.

La table support 18 peut être déplacée verticalement selon la direction Z grâce à une colonne 21 et un moteur 20 pour mettre en appui les pièces à scier 17 contre la nappe de fils 15.

La périphérie des cylindres guide-fils 11, 12 est gravée avec des gorges qui définissent l'intervalle entre les fils voisins de la nappe de fils 15, donc l'épaisseur des tranches sciées. Ces dernières sont séparées les unes des autres par des fentes ou interstices de sciage.

Le fil 14 est tendu et à la fois guidé et tracté par les cylindres guide-fils pour se déplacer selon un mouvement continu dans ce mode d'exécution. Ce fil est favorablement constitué d'acier à ressort d'un diamètre compris entre 0,1 et 0,2 mm afin de scier des blocs de matériaux durs ou de composition plus particulière, notamment pour l'industrie des semi-conducteurs, des installations solaires ou des céramiques, tels que silicium, céramique, composés des éléments des groupes, III-V et II-VI, GGG (Grenat à Gadolinium-Gallium), saphir, etc., en tranches de 0,1 à 5 mm d'épaisseur environ. L'agent abrasif est un produit du commerce et peut être du diamant, du carbure de silicium, de l'alumine, etc., sous forme fixée au fil ou sous forme libre en suspension dans un liquide qui sert de transporteur aux particules de l'abrasif.

Les cylindres guide-fils 11, 12 définissent par leurs génératrices supérieures un plan de travail XY qui est parallèle au plan déterminé par les axes Y des cylindres guide-fils et dans ce mode d'exécution perpendiculaire à la direction Z d'avance de la table support 18.

La nappe de fils 15 est parallèle et contenue dans ce plan de travail lorsque aucune pièce à scier n'est sollicitée contre elle.

Au contraire, lors du sciage cette nappe subit un léger fléchissement dont l'amplitude est exagérée dans un but de visualisation.

Les pièces à scier 17 sont fixées par collage sur des plaques intermédiaires 25, telles que des plaques en verre, en epoxy, en graphite ou en d'autres matériaux durs, et ces dernières sont montées sur la table support 18 grâce à un porte-lingot, sous forme d'un coulisseau 26 avec interposition d'une plaque de collage 27.

Cette dernière fait office d'organe d'inclinaison 30 en forme de cale angulaire puisqu'elle permet de fixer la pièce à scier 17 de façon légèrement inclinée, telle que la face prismatique inférieure 17f dirigée vers la nappe de fils forme un angle d'inclinaison α, α' prédéterminé avec un plan X' Y' parallèle au plan de travail XY, et ceci suivant une droite d'intersection Y' perpendiculaire aux fils de la nappe de fils et parallèle aux axes Y des cylindres guide-fils.

Ainsi, l'entame de sciage (figure 2a) peut s'effectuer par une arête prismatique 17g de la pièce à scier 17.

Etant donné que les fils de la nappe de fils 15 se déplacent de gauche à droite à la figure 2a, l'angle d'inclinaison α s'ouvre dans une direction opposée à la direction de déplacement 15a des fils, de manière que le sciage de la pièce 17 commence par l'arête prismatique 17g se trouvant en aval par rapport à la direction de déplacement 15a des fils.

Cette entame par l'arête (figure 2a) permet d'obtenir des tranches d'épaisseur égales entre elles. Lorsqu'on entame la coupe avec la surface prismatique parallèle au plan de travail XY et à la nappe de fils 15, on a observé que les fils 14 de la nappe de fils 15 ont tendance à se grouper deux par deux, ce qui engendre des tranches sciées ou wafers d'épaisseur inégale (figure 10). Ce phénomène s'estompe après quelques millimètres de coupe, mais est absolument à éviter pour de nombreuses applications.

En commençant la coupe avec un angle d'inclinaison α, α' prédéterminé, cet inconvénient majeur est évité et on obtient dès le départ du sciage des tranches sciées d'égale épaisseur.

En outre, en fin de sciage (figure 2b) la position inclinée de la pièce à scier est telle que les fils de la nappe de fils 15 ne pénètrent, lors de leur avance, pas de la plaque intermédiaire 25 dans la pièce à scier 17 fixée sur cette plaque intermédiaire 25.

Au contraire, les fils avancent en fin de coupe toujours de la pièce à scier dans la plaque intermédiaire, ce qui permet d'obtenir une pénétration de l'abrasif dans la matière à couper et par conséquent une coupe de très grande qualité sans écaillement jusqu'à la fin complète du sciage.

En effet, on a observé dans les dispositifs de sciage conventionnels antérieurs à la présente invention que les fils de la nappe de fils passent en fin de coupe dans la plaque intermédiaire 25 et de celle-ci à travers la colle dans la pièce à scier 17. La coupe de la bordure supérieure 17h subit alors un écaillage préjudiciable qu'il y a lieu d'éviter pour de nombreuses applications.

Grâce à l'inclinaison des pièces à scier, cet inconvénient majeur est également évité. Donc par un procédé de sciage et un dispositif peu compliqués, la présente invention permet de remédier à des défauts majeurs de deux types différents de l'art antérieur.

L'angle d'inclinaison α, α' peut présenter une valeur comprise entre 0,5° et 7°, de préférence entre 1° et 3,5°. Les faces supérieures et inférieures de la cale angulaire 27 formant donc entre elles un angle α, α' compris entre 0,5 et 7°. L'homme du métier déterminera aisément par quelques essais l'angle d'inclinaison idéal pour une application donnée.

Il y a lieu d'observer que les angles d'inclinaison α, α' des deux pièces à scier 17a et 17b montés côte à côte sur une même table support 18 possèdent des valeurs différentes. En effet, l'angle d'inclinaison α de la pièce à scier 17a de la pièce à scier située à gauche aux figures 2a et 2b, donc en amont du parcours des fils, est plus grand que l'angle d'inclinaison α' de l'autre pièce à scier 17b.

Dans la variante représentée à la figure 3, les pièces à scier 17c et 17d sont d'un autre type, à savoir des pièces monocristallines au lieu de pièces multicristallines. Ces pièces possèdent des arêtes arrondies.

Cependant le procédé et le dispositif de sciage restent identiques, puisque l'entame du sciage commence par l'arête en aval de la pièce prismatique permettant d'obtenir des tranches d'égale épaisseur.

Les figures 4 à 8 représentent différents types d'organes d'inclinaison 30. Ainsi, l'organe d'inclinaison représenté à la figure 4 est constitué par la plaque de collage 27 qui possède une forme de cale angulaire interposée entre la plaque intermédiaire 25 et le coulisseau 26.

Dans le cas de la figure 5, l'organe d'inclinaison 30a est formé par le porte-lingot 26a ou coulisseau qui possède une surface inférieure oblique 33 sur laquelle est collée la plaque de collage 27a présentant deux surfaces principales parallèles. La normale à ladite surface inférieure 33 forme un angle d'inclinaison α avec le plan médian du porte-lingot 26a.

L'organe d'inclinaison 30b de la figure 6 est constitué par un dispositif pivotant 34. Ce dernier comprend un axe de pivotement central 35 monté sur le porte-lingot 26b et portant la plaque de collage 27b collée par l'intermédiaire de la plaque intermédiaire 25 sur la pièce à scier 17. Deux vis de réglage 36, 37 montées sur le porte-lingot 26b coopèrent avec la plaque de collage 27b et permettent de régler et fixer la position angulaire de cette dernière de façon à obtenir l'angle d'inclinaison α adéquat.

En référence à la figure 7, l'organe d'inclinaison 30c comprend un axe de pivotement 40 prévu latéralement sur le porte-lingot 26c. La plaque de collage 27c est montée pivotante sur cet axe 40 et sa position angulaire donc l'angle d'inclinaison peut être réglé et fixé au moyen de la tige filetée 41 et de l'écrou d'arrêt 42 montés de l'autre côté sur la plaque de collage 27c qui porte la plaque intermédiaire 25 et la pièce à scier 17.

Finalement les organes d'inclinaison 30d illustrés à la figure 8 comprennent un demi-axe 44 monté dans un alésage semi-circulaire 45 de la table support 18 et dont l'orientation axiale est perpendiculaire aux fils de la nappe de fils. Une vis d'arrêt 46 permet de régler la position angulaire du demi-axe 44 et de maintenir ce dernier dans son logement. L'axe du demi-axe 44 est parallèle aux axes des cylindres guide-fils 11, 12.

Un porte-lingot 26 est monté sur ce demi-axe et porte une pièce à scier par l'intermédiaire d'une plaque de collage 27d et d'une plaque intermédiaire 25.

Dans le second mode d'exécution représenté à la figure 9, la table support 18 porte également deux pièces à scier 17a et 17b par l'intermédiaire de plaques intermédiaires 25 et de plaques de collage 27. Cependant les fils de la nappe de fils 15 effectuent ici un mouvement alternatif en va-et-vient.

Les organes d'inclinaison 30e sont donc dans ce cas de figure agencés de façon que les angles d'inclinaison α, et α" s'ouvrent dans des directions opposées l'un par rapport à l'autre. Ainsi, à la fin du sciage la nappe de fil légèrement fléchie se trouve sensiblement parallèle aux faces prismatiques supérieures des deux pièces à scier 17 et on évite ainsi que les fils pénètrent de la plaque intermédiaire 25 vers la pièce à scier 17. La coupe est donc sans écaillement jusqu'à la fin du sciage.

Les organes d'inclinaison 30e sont ici constitués par des cales angulaires 27e formant les plaques de collage 27. D'autres organes d'inclinaison, par exemple des pièces pivotantes montées sur la table support 18 ou le porte-lingot pourront également être utilisées. La position angulaire α, α " de ces pièces pivotantes peut alors être ajustée et fixée au moyen d'un organe d'arrêt, tel qu'une vis de blocage.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, la table support 18 pourra supporter une ou plus que deux pièces à scier 17.

Le mouvement relatif entre la table support 18 et la nappe de fils 15 pourra également être réalisé par déplacement de la nappe de fils et par tout moyen mécanique, pneumatique, hydraulique adéquat.

Les porte-lingots 26 pourraient être d'une construction très différente. La plaque de collage ou la plaque intermédiaire pourrait être supprimée.

Au lieu d'avoir une table support 18, on pourra prévoir deux ou davantage de tables support portant chacune un nombre prédéterminé de pièces supports par l'intermédiaire d'organes d'inclinaison.

## Revendications

1. Procédé de sciage par fil comprenant le sciage d'au moins une pièce à scier prismatique (17) à base sensiblement carrée ou rectangulaire au moyen d'au moins une nappe de fils (15) tendue entre au moins deux cylindres guide-fils (11, 12) dont les axes (Y) sont parallèles à un plan de travail (XY) et maintenue en position par des gorges prévues sur la surface des cylindres guide-fils (11, 12) qui définissent l'intervalle entre les fils de la nappe de fils (15), donc l'épaisseur des tranches sciées, les fils de la nappe étant susceptibles de se déplacer selon un mouvement prédéterminé en appui contre la ou les pièces à scier (17) fixées sur au moins une table support (18) par l'intermédiaire d'une plaque intermédiaire (25), le procédé de sciage étant effectué par un mouvement relatif entre la pièce à scier et la nappe de fils, **caractérisé par le fait que** l'on fixe la ou les pièces à scier (17) sur la table support (18) de façon telle qu'une des faces prismatiques (17f) de cette pièce dirigée vers la nappe de fils (15) forme un angle d'inclinaison prédéterminé (α, α' ; α, α") avec ledit plan de travail (XY) suivant une droite d'intersection parallèle aux axes (Y) des cylindres guide-fils, la grandeur de cet angle d'inclinaison (α,α' ; α, α") étant fixée, d'une part, de manière que l'entame du sciage s'effectue par une arête prismatique (17g) de la ou des pièces à scier (17) et, d'autre part, de manière qu'en fin de coupe les fils de la nappe de fils (15) ne pénètrent pas, lors de leur avance longitudinale, à partir d'une plaque intermédiaire (25) donnée dans la pièce à scier (17) qui est fixée sur cette plaque intermédiaire (25) donnée.

2. Procédé selon la revendication 1, **caractérisé par le fait que** l'on fixe au moins deux pièces à scier (17) prismatiques sur la table support, que l'on déplace le fil selon un mouvement continu et que l'on fixe lesdits angles d'inclinaison (α,α') de façon qu'ils s'ouvrent dans une direction . (15a) opposée à la direction de déplacement du fil et de manière que le sciage des pièces commence par l'arête prismatique (17g) se trouvant en aval par rapport à la direction de déplacement des fils de la nappe de fils (15).

3. Procédé selon la revendication 2, **caractérisé par le fait que** l'on fixe des valeurs différentes pour les deux angles d'inclinaison (α,α'), l'angle d'inclinaison (α) de la pièce à scier (17a) situé en amont du parcours des fils étant plus grand.

4. Procédé selon la revendication 1, **caractérisé en ce que** l'on fixe au moins deux pièces (17) à scier prismatiques sur la table support, que l'on déplace le fil selon un mouvement alternatif, et que l'on fixe les angles d'inclinaison (α,α") de façon qu'ils s'ouvrent dans des directions opposées l'une par rapport à l'autre.

5. Procédé selon la revendication 1 ou 2, **caractérisé en ce que** l'on fixe ledit angle d'inclinaison (α,α') à une valeur comprise entre 0,5° et. 7°, de préférence entre 1° et 3,5°.

6. Dispositif de sciage par fil pour la mise en oeuvre du procédé selon l'une des revendications 1 à 3, comprenant au moins une nappe de fils (15) tendue entre au moins deux cylindres guide-fils (11, 12) dont les axes (Y) sont parallèles à un plan de travail (XY) et maintenue en position par des gorges prévues sur la surface desdits cylindres guide-fils (11, 12) qui définissent l'intervalle entre les fils de ladite nappe de fils, donc l'épaisseur des tranches sciées, les fils étant susceptibles de se déplacer selon un mouvement prédéterminé en appui contre au moins une pièce à scier (17) prismatique à base sensiblement carrée ou rectangulaire fixée sur une table support (18) par l'intermédiaire d'une plaque intermédiaire (25), des moyens (20, 21) étant prévus pour effectuer un mouvement relatif entre la pièce à scier (17) et la nappe de fils (15), le dispositif de sciage comprenant des organes d'inclinaison (30) permettant de fixer la ou les pièces à scier sur la table support de façon qu'une des faces prismatiques (17f) dirigées vers la nappe de fils (15) forme un angle d'inclinaison (α,α') prédéterminé avec ledit plan de travail (XY) suivant une droite d'intersection parallèle aux axes (Y) des cylindres guide-fils, cet angle d'intersection étant fixé de manière que, d'une part, l'entame du sciage s'effectue par une arête prismatique (17g) de la ou des pièces à scier et, d'autre part, en fin de coupe les fils de la nappe de fils (15) ne pénètrent pas, lors de leur avance longitudinale, à partir d'une plaque intermédiaire (25) donnée dans la pièce à scier (17) fixée sur cette plaque intermédiaire (25) donnée, **caractérisé par le fait que** la table support (18) est agencée pour recevoir au moins deux pièces à scier (17), le fil étant déplacé selon un mouvement continu selon une direction de déplacement (15a), et **par le fait que** les organes d'inclinaison (30) sont agencés de façon que lesdits angles d'inclinaison (α,α') s'ouvrent dans une direction opposée à la direction de déplacement (15a) du fil et de manière que le sciage des pièces à scier (17) commence par l'arête prismatique (17g) se trouvant en aval par rapport à la direction de déplacement (15a) des fils de la nappe de fils (15).

7. Dispositif selon la revendication 6, **caractérisé par le fait que** les organes d'inclinaison (30) sont agencés de façon que l'angle d'inclinaison (α) de la pièce à scier située en amont du parcours des fils est plus grand.

8. Dispositif de sciage par fil pour la mise en oeuvre du procédé selon la revendication 1 ou 4 comprenant au moins une nappe de fils (15) tendue entre au moins deux cylindres guide-fils (11,12) dont les axes (Y) sont parallèles à un plan de travail (XY) et maintenue en position par des gorges prévues sur la surface desdits cylindres guide-fils (11, 12) qui définissent l'intervalle entre les fils de ladite nappe de fils, donc l'épaisseur des tranches sciées, les fils étant susceptibles de se déplacer selon un mouvement prédéterminé en appui contre au moins une pièce à scier (17) prismatique à base sensiblement carrée ou rectangulaire fixée sur une table support (18) par l'intermédiaire d'une plaque intermédiaire (25), des moyens (20, 21) étant prévus pour effectuer un mouvement relatif entre la pièce à scier (17) et la nappe de fils (15), le dispositif de sciage comprenant des organes d'inclinaison (30a) permettant de fixer la ou les pièces à scier sur la table support de façon qu'une des faces prismatiques (17f) dirigées vers la nappe de fils (15) forme un angle d'inclinaison (α,α") prédéterminé avec ledit plan de travail (XY) suivant une droite d'intersection parallèle aux axes (Y) des cylindres guide-fils, cet angle d'intersection étant fixé de manière que, d'une part, l'entame du sciage s'effectue par une arête prismatique (17g) de la ou des pièces à scier et, d'autre part, en fin de coupe les fils de la nappe de fils (15) ne pénètrent pas, lors de leur avance longitudinale, à partir d'une plaque intermédiaire (25) donnée dans la pièce à scier (17) fixée sur cette plaque intermédiaire donnée, **caractérisé par le fait que** la table support (18) est agencée pour recevoir au moins deux pièces à scier (17), le fil étant déplacé selon un mouvement alternatif, et **par le fait que** les organes d'inclinaison (30e) sont agencés de façon que les angles d'inclinaison (α,α") s'ouvrent dans des directions opposées l'un par rapport à l'autre.

9. Dispositif selon l'une des revendications 6 à 8, **caractérisé par le fait que** les organes d'inclinaison (30) sont constitués par des cales angulaires (27) interposées entre la table de support (18) et les pièces à scier (17) ou leur plaque intermédiaire (25).

## Patentansprüche

1. Drahtsägeverfahren, das Sägen zumindest eines prismatischen, zu sägenden Werkstückes (17) mit einer im Wesentlichen quadratischen oder rechtecktigen Grundfläche mittels zumindest einer Drahtschicht (15) umfassend, die zwischen zumindest zwei Drahtführungszylindern (11, 12) aufgespannt ist, deren Achsen (Y) parallel zu einer Arbeitsebene (XY) sind, und deren Lage durch Rillen auf der Oberfläche der Drahtführungszylinder (11, 12) gehalten wird, die den Abstand zwischen den Drähten der Drahtschicht (15) und damit die Dicke der gesägten Scheiben definieren, wobei die Drähte der Schicht einer vorbestimmten Bewegung folgend und an das oder die zu sägenden Werkstücke (17) angedrückt verschoben werden können, die über eine Zwischenplatte (25) auf zumindest einem Auflagetisch (18) befestigt sind, und wobei das Sägeverfahren durch eine Relativbewegung zwischen dem zu sägenden Werkstück und der Drahtschicht realisiert wird, **dadurch gekennzeichnet, dass** das oder die zu sägenden Werkstücke (17) so auf dem Auflagetisch (18) befestigt werden, dass eine der prismatischen Seiten (17f) dieses Werkstücks, die zur Drahtschicht (15) hin gerichtet ist, einer zu den Achsen (Y) der Drahtführungszylinder parallelen Schnittgeraden folgend einen vorbestimmten Neigungswinkel (α, α'; α, α") mit der Arbeitsebene (XY) bildet, wobei die Grösse dieses Neigungswinkels (α, α'; α, α") einerseits so festgelegt ist, dass das Ansägen über eine prismatische Kante (17g) des oder der zu sägenden Werkstücke (17) erfolgt, und andererseits so, dass am Schnittende die Drähte der Drahtschicht (15) bei ihrem Längsvorschub nicht von einer gegebenen Zwischenplatte (25) aus in das zu sägende Werkstück (17) eindringen, das auf dieser gegebenen Zwischenplatte (25) befestigt ist.

2. Verfahren nach Anspruch 1, **dadurch gekennzeichnet, dass** zumindest zwei prismatische, zu sägende Werkstücke (17) auf dem Auflagetisch befestigt werden, dass der Draht einer kontinuierlichen Bewegung folgend verschoben wird und dass die Neigungswinkel (α, α') so festgelegt werden, dass sie sich in einer der Verschiebungsrichtung des Drahtes entgegengesetzten Richtung (15a) öffnen und dass das Sägen der Werkstücke mit der prismatischen Kante (17g) beginnt, die sich bezüglich der Verschiebungsrichtung der Drähte der Drahtschicht (15) abwärts befindet.

3. Verfahren nach Anspruch 2, **dadurch gekennzeichnet, dass** für die beiden Neigungswinkel (α, α') verschiedene Werte festgelegt werden, wobei der Neigungswinkel (α) des bezüglich des Laufes der Drähte aufwärts befindlichen, zu sägenden Werkstücks (17a) grösser ist.

4. Verfahren nach Anspruch 1, **dadurch gekennzeichnet, dass** zumindest zwei prismatische, zu sägende Werkstücke (17) auf dem Auflagetisch befestigt werden, dass der Draht einer Hin- und Herbewegung folgend verschoben wird und dass die Neigungswinkel (α, α') so festgelegt werden, dass sie sich in einander entgegengesetzten Richtungen öffnen.

5. Verfahren nach Anspruch 1 oder 2, **dadurch gekennzeichnet, dass** der Neigungswinkel (α, α') auf einen Wert zwischen 0,5° und 7° und bevorzugt zwischen 1° und 3,5° festgelegt wird.

6. Drahtsägevorrichtung für die Umsetzung des Verfahrens nach einem der Ansprüche 1 bis 3, zumindest eine Drahtschicht (15) umfassend, die zwischen zumindest zwei Drahtführungszylindern (11, 12) aufgespannt ist, deren Achsen (Y) parallel zu einer Arbeitsebene (XY) sind, und deren Lage durch Rillen auf der Oberfläche der Drahtführungszylinder (11, 12) gehalten wird, die den Abstand zwischen den Drähten der Drahtschicht (15) und damit die Dicke der gesägten Scheiben definieren, wobei die Drähte einer vorbestimmten Bewegung folgend und an das zumindest eine prismatische, zu sägende Werkstück (17) mit im Wesentlichen quadratischer oder rechtecktiger Grundfläche angedrückt verschoben werden können, das über eine Zwischenplatte (25) auf einem Auflagetisch (18) befestigt ist, wobei Mittel (20, 21) vorgesehen sind, um eine Relativbewegung zwischen dem zu sägenden Werkstück (17) und der Drahtschicht (15) zu realisieren, und die Sägevorrichtung Neigeorgane (30) umfasst, die es gestatten, dass das oder die zu sägenden Werkstücke (17) so auf dem Auflagetisch befestigt werden, dass eine der prismatischen Seiten (17f), die zur Drahtschicht (15) hin gerichtet sind, einer zu den Achsen (Y) der Drahtführungszylinder parallelen Schnittgeraden folgend einen vorbestimmten Neigungswinkel (α, α') mit der Arbeitsebene (XY) bildet, wobei dieser Schnittwinkel einerseits so festgelegt ist, dass das Ansägen über eine prismatische Kante (17g) des oder der zu sägenden Werkstücke erfolgt, und andererseits so, dass am Schnittende die Drähte der Drahtschicht (15) bei ihrem Längsvorschub nicht von einer gegebenen Zwischenplatte (25) aus in das zu sägende Werkstück (17) eindringen, das auf dieser gegebenen Zwischenplatte (25) befestigt ist, **dadurch gekennzeichnet, dass** der Auflagetisch (18) so eingerichtet ist, dass er zumindest zwei zu sägende Werkstücke (17) aufnimmt, wobei der Draht einer kontinuierlichen Bewegung folgend in einer Verschiebungsrichtung (15a) verschoben wird, und **dadurch**, dass die Neigeorgane (30) so eingerichtet sind, dass sich die Neigungswinkel (α, α') in einer der Verschiebungsrichtung (15a) des Drahtes entgegengesetzten Richtung öffnen und dass das Sägen der zu sägenden Werkstücke (17) mit der prismatischen Kante (17g) beginnt, die sich bezüglich der Verschiebungsrichtung (15a) der Drähte der Drahtschicht (15) abwärts befindet.

7. Vorrichtung nach Anspruch 6, **dadurch gekennzeichnet, dass** die Neigeorgane (30) so eingerichtet sind, dass der Neigungswinkel (α) des bezüglich des Laufes der Drähte aufwärts befindlichen, zu sägenden Werkstücks grösser ist.

8. Drahtsägevorrichtung für die Umsetzung des Verfahrens nach Anspruch 1 oder 4, zumindest eine Drahtschicht (15) umfassend, die zwischen zumindest zwei Drahtführungszylindern (11, 12) aufgespannt ist, deren Achsen (Y) parallel zu einer Arbeitsebene (XY) sind, und deren Lage durch Rillen auf der Oberfläche der Drahtführungszylinder (11, 12) gehalten wird, die den Abstand zwischen den Drähten der Drahtschicht (15) und damit die Dicke der gesägten Scheiben definieren, wobei die Drähte einer vorbestimmten Bewegung folgend und an das zumindest eine prismatische, zu sägende Werkstück (17) mit im Wesentlichen quadratischer oder rechtecktiger Grundfläche angedrückt verschoben werden können, das über eine Zwischenplatte (25) auf einem Auflagetisch (18) befestigt ist, wobei Mittel (20, 21) vorgesehen sind, um eine Relativbewegung zwischen dem zu sägenden Werkstück (17) und der Drahtschicht (15) zu realisieren, und die Sägevorrichtung Neigeorgane (30a) umfasst, die es gestatten, dass das oder die zu sägenden Werkstücke so auf dem Auflagetisch befestigt werden, dass eine der prismatischen Seiten (17f), die zur Drahtschicht (15) hin gerichtet sind, einer zu den Achsen (Y) der Drahtführungszylinder parallelen Schnittgeraden folgend einen vorbestimmten Neigungswinkel (α, α") mit der Arbeitsebene (XY) bildet, wobei dieser Schnittwinkel einerseits so festgelegt ist, dass das Ansägen über eine prismatische Kante (17g) des oder der zu sägenden Werkstücke erfolgt, und andererseits so, dass am Schnittende die Drähte der Drahtschicht (15) bei ihrem Längsvorschub nicht von einer gegebenen Zwischenplatte (25) aus in das zu sägende Werkstück (17) eindringen, das auf dieser gegebenen Zwischenplatte (25) befestigt ist, **dadurch gekennzeichnet, dass** der Auflagetisch (18) so eingerichtet ist, dass er zumindest zwei zu sägende Werkstücke (17) aufnimmt, wobei der Draht einer Hin- und Herbewegung folgend verschoben wird, und **dadurch**, dass die Neigeorgane (30e) so eingerichtet sind, dass sich die Neigungswinkel (α, α") in einander entgegengesetzten Richtungen öffnen.

9. Vorrichtung nach einem der Ansprüche 6 bis 8, **dadurch gekennzeichnet, dass** die Neigeorgane (30) aus Keilen (27) bestehen, die zwischen den Auflagetisch (18) und die zu sägenden Werkstücke (17) oder ihre Zwischenplatte (25) eingefügt sind.

## Claims

1. Wire sawing process comprising the sawing of at least one prismatic piece (17) to be sawed with a substantially square or rectangular base by means of at least one layer (15) of wires stretched between at least two wire guide cylinders (11, 12) whose axes (Y) are parallel to a working plane (XY) and held in position by grooves provided on the surface of the wire guide cylinders (11, 12) which define the interval between the wires of the layer (15) of wires, hence the thickness of the sawed slices, the wires of the layer being adapted to move with a predetermined movement while bearing against the piece or pieces (17) to be sawed fixed on at leaset one support table (18) by means of an intermediate plate (25), the sawing process being carried out by a relative advancing movement between the piece to be sawed and the layer of wires, **characterized by** the fact that the piece or pieces (17) to be sawed are fixed on the support table (18) such that one of prismatic surfaces (17f) of this piece directed toward the layer (15) of wires forms a predetermined angle of inclination (α, α'; α, α") with said working plane (XY) along an intersection line parallel to the axes (Y) of the wire guide cylinders, the size of this angle of inclination (α, α'; α, α") being fixed, on the one hand, such that the beginning of sawing takes place by a prismatic edge (17g) of the piece or pieces to be sawed (17) and, on the other hand, such that at the end of cutting the wires of the layer (15) of wires do not penetrate, during their longitudinal advance, from a given intermediate plate (25) into the piece (17) to be sawed which is fixed on this given intermediate plate (25).

2. Process according to claim 1, **characterized by** the fact that there are fixed at least two prismatic pieces (17) to be sawed on the support table, that the wire is given a continuous movement and that said angles of inclination (α, α') are fixed such that they open in a direction (15a) opposite the direction of movement of the wire and such that the sawing of the pieces begins with the prismatic edge (17g) located downstream relative to the direction of movement of the wires of the layer (15) of wires.

3. Process according to claim 2, **characterized by** the fact that different values are fixed for the two angles of inclination (α, α'), the angle of inclination (α) of the piece to be sawed (17a) located upstream of the path of the wires being greater.

4. Process according to claim 1, **characterized in that** at least two prismatic pieces (17) to be sawed are fixed on the support table, that the wire is given an alternating movement, and that the angles of inclination (α, α") are fixed such that they open in opposite directions relative to each other.

5. Process according to claim 1 or 2, **characterized in that** said angle of inclination (α, α') is fixed at a value comprised between 0.5° and 7°, preferably between 1° and 3.5°.

6. Wire sawing device for practicing the process according to one of the claims 1 to 3, comprising at least one layer (15) of wires stretched between at least two wire guide cylinders (11, 12) whose axes (Y) are parallel to a working plane (XY) and held in position by grooves provided on the surface of said wire guide cylinders (11, 12) which define the interval between the wires of said layer of wires, hence the thickness of the sawed slices, the wires being adapted to move with a predetermined movement while bearing against at least one prismatic piece (17) to be sawed with a substantially square or rectangular base fixed on a support table (18) by means of an intermediate plate (25), means (20, 21) being provided to carry out a relative movement between the piece (17) to be sawed and the layer (15) of wires, the sawing device comprising inclination members (30) permitting fixing the piece or pieces to be sawed on the support table such that one of the prismatic surfaces (17f) directed toward the layer (15) of wires forms a predetermined angle of inclination (α, α') with said working plane (XY) along a line of intersection parallel to the axes (Y) of the wire guide cylinders, this angle of intersection being fixed such that, on the one hand, the beginning of sawing takes place at a prismatic edge (17g) of the piece or pieces to be sawed and, on the other hand, at the end of cutting the wires of the layer (15) of wires do not penetrate, during their longitudinal advance, from a given intermediate plate (25) into the piece (17) to be sawed fixed on this given intermediate plate (25), **characterized by** the fact that the support table (18) is arranged to receive at least two pieces (17) to be sawed, the wire being moved with a continuous movement according to a direction of movement (15a), and by the fact that the inclination members (30) are arranged such that said angles of inclination (α, α') open in a direction opposite to the direction of movement (15a) of the wire and such that the sawing of the pieces (17) to be sawed begins with the prismatic edge (17g) located downstream relative to the direction of movement (15a) of the wires of the layer (15) of wires.

7. Device according to claim 6, **characterized by** the fact that the inclination members (30) are arranged such that the angle of inclination (α) of the piece to be sawed located upstream of the path of the wires is greater.

8. Wire sawing device for practicing the process according claim 1 or 4, comprising at least one layer (15) of wires stretched between at least two wire guide cylinders (11, 12) whose axes (Y) are parallel to a working plane (XY) and held in position by grooves provided on the surface of said wire guide cylinders (11, 12) which define the interval between the wires of said layer of wires, hence the thickness of the sawed slices, the wires being adapted to move with a predetermined movement while bearing against at least one prismatic piece (17) to be sawed with a substantially square or rectangular base fixed on a support table (18) by means of an intermediate plate (25), means (20, 21) being provided to carry out a relative movement between the piece (17) to be sawed ant the layer (15) of wires, the sawing device comprising inclination members (30a) permitting fixing the piece or pieces to be sawed on the support table such that one of the prismatic surfaces (17f) directed toward the layer (15) of wires forms a predetermined angle of inclination (α, α") with said working plane (XY) along a line of intersection parallel to the axes (Y) of the wire guide cylinders, this angle of intersection being fixed such that, on the one hand, the beginning of sawing takes place at a prismatic edge (17g) of the piece or pieces to be sawed and, on the other hand, at the end of cutting the wires of the layer (15) of wires do not penetrate, during their longitudinal advance, from a given intermediate plate (25) into the piece (17) to be sawed fixed on this given intermediate plate, **characterized by** the fact that the support table (18) is arranged to receive at least two pieces (17) to be sawed, the wire being moved with an alternating movement, and by the fact that the inclination members (30e) are arranged such that the angles of inclination (α, α") open in opposite directions relative to each other.

9. Device according to one of claims 6 to 8, **characterized by** the fact that the inclination members (30) are constituted by a angular wedges (27) interposed between the support table (18) and the pieces (17) to be sawed or their intermediate plate (25).
